# FASCICULE DE BREVET EUROPEEN

(11) **EP 3 265 331 B1**
(45) Date de publication et mention de la délivrance du brevet: **15.06.2022**
(21) Numéro de dépôt: 16707178.6
(22) Date de dépôt: 02.02.2016
(51) Int. Cl.: B60G 7/00, B60G 21/05, B60B 35/08, B60B 35/00

(54) **PROCÉDÉ DE RENFORCEMENT DE LA FIXATION D'UNE TRAVERSE SUR UN BRAS LONGITUDINAL D'UN ESSIEU SEMI-RIGIDE**
VERFAHREN ZUR VERSTÄRKUNG DER BEFESTIGUNG EINES QUERPROFILS AUF EINEM LÄNGSLENKER EINER VERBUNDLENKERACHSE
METHOD FOR REINFORCING THE ATTACHMENT OF A CROSS BEAM ONTO A LONGITUDINAL ARM OF A TWIST-BEAM AXLE

(30) Priorité: 05.03.2015 FR 1551850
(43) Date de publication de la demande: 10.01.2018
(73) Titulaire: Renault s.a.s, 92100 Boulogne Billancourt (FR)
(72) Inventeur: DUBE, Emmanuel, 7220 Laigne en Belin (FR); ROLLET, Remi, 91190 Gif Sur Yvette (FR)
(74) Mandataire: Renault Group
(86) Numéro de dépôt international: PCT/FR2016/050215
(87) Numéro de publication internationale: WO 2016/139398

(56) Documents cités:
- DE-A1- 19 928 537
- DE-U1- 29 719 347
- FR-A1- 2 964 904
- FR-A1- 2 964 909

## Description

### DOMAINE TECHNIQUE DE L'INVENTION

L'invention concerne un procédé de renforcement de la fixation d'une traverse d'axe transversal d'un essieu élastique en torsion sur un bras longitudinal dudit essieu, au moins un tronçon d'extrémité transversale de la traverse étant formé par une paroi métallique présentant un profil fermé se terminant par un bord d'extrémité libre de contour fermé, le bord d'extrémité libre étant fixé sur toute sa longueur avec la face du bras longitudinal, le bord libre comportant au moins première portion dite "portion fortement sollicitée" et au moins une deuxième portion, dite "portion faiblement sollicitée".

### ARRIERE PLAN TECHNIQUE DE L'INVENTION

Il est connu d'équiper les trains arrière de véhicules automobiles avec un essieu de type "semi-rigide". Un tel essieu comporte principalement deux bras longitudinaux entre lesquels s'étend une traverse élastique en torsion et rigide en flexion.

Chaque bras comporte une extrémité avant qui est montée pivotante sur le châssis du véhicule tandis qu'une extrémité arrière porte une roue arrière du véhicule.

La traverse s'étend transversalement entre les deux bras, de manière décalée longitudinalement vers l'arrière par rapport aux extrémités avant des bras. Les propriétés élastiques de la traverse lui permettent notamment de remplir une fonction anti-dévers qui limite le roulis de la carrosserie.

Il est connu de réaliser des traverses en tôles métalliques profilées. Les bords d'extrémité transversale libre de la traverse sont généralement fixés sur les bras par soudage. Les bords libres de chaque extrémité de la traverse sont conformés de manière à être jointifs sur toute leur longueur avec une face externe du bras associé. La fixation est effectuée par soudage sur toute la longueur du joint entre la traverse et le bras.

Lorsque le tronçon d'extrémité libre de la traverse présente un profil fermé, le bord d'extrémité libre de la traverse est jointif avec le bras selon un contour fermé. On dépose alors un cordon de soudure dit "périmétrique" qui s'étend tout autour du bord, à cheval sur la traverse et le bras. Ce cordon de soudure périmétrique peut être réalisé en une seule opération, l'extrémité finale du cordon de soudure recouvrant l'extrémité initiale du cordon de soudure. Le cordon de soudure définit ainsi un contour fermé qui entoure le bord libre de la traverse en épousant sa forme. Un tel cordon de soudure sera qualifié de cordon "annulaire" dans la suite de la description.

En variante, le cordon de soudure périmétrique est déposé en une succession de tronçons jointifs.

Cette configuration annulaire du cordon de soudure permet d'éliminer les amorces de rupture habituellement présentes en bout de cordon, le cordon de soudure présentant ainsi une grande résistance à la rupture.

Cependant, certaines portions du cordon de soudure sont plus sollicitées que d'autres. Ces portions fortement sollicitées sont susceptibles de se fissurer, fragilisant ainsi la fixation de la traverse sur le bras. Généralement, le tronçon d'extrémité de telles traverses est sollicité en flexion autour d'un axe vertical orthogonal à l'axe principal de la traverse et à l'axe principal du bras de sorte que les portions les plus sollicitées du cordon de soudure sont situées aux extrémités avant et arrière du bord libre.

Pour éviter que la fixation ne se détériore précocement, il est connu de modifier le profil du tronçon d'extrémité de la traverse de manière à diminuer la sollicitation d'écartement des portions fortement sollicitées du bord libre par rapport au bras. Ainsi, lorsque le tronçon d'extrémité de la traverse présente un profil fermé, c'est-à-dire une forme tubulaire, il est connu de réaliser un profil oblong dont le grand axe s'étend parallèlement à l'axe principal du bras.

Cependant, en cas de sollicitations extrêmement importantes, il peut arriver qu'une telle mesure soit insuffisante pour permettre au cordon de soudure de résister à la rupture.

Il existe des solutions connues à ce problème. Par example, le document FR 2 964 909 A1 divulgue un essieu souple selon le préambule de la revendication 9, pourvu d'une traverse constituée d'un corps tubulaire profilé dans lequel un profilage de soulagement de tensions ou contraintes est façonné dans les régions extrêmes. Les profilages de soulagement de tensions ou contraintes sont orientés globalement perpendiculairement au bord libre de la traverse. Le document DE 199 28 537 A1 décrit une traverse reliée à un support de roue par soudure et une nervure parallèle à toute la ligne de soudure et située sur le support de roue. Ladite nervure est formée par réduction de la section transversale circulaire du support de roue.

L'invention propose un procédé permettant de renforcer la fixation de la traverse sur le bras de manière simple et peu onéreuse, sans ajout de pièces supplémentaires.

### BREF RESUME DE L'INVENTION

L'invention propose un procédé du type décrit précédemment, caractérisé en ce qu'il comporte, postérieurement à la fixation de la traverse sur le bras longitudinal, une opération de réalisation d'une contraction d'au moins une zone, dite de précontrainte, de la paroi de la traverse située transversalement à distance de l'au moins une portion faiblement sollicitée du bord libre pour créer une précontrainte de traction transversal dans une première partie de la paroi de traverse tendant à écarter l'au moins une portion faiblement sollicitée de la face du bras, cette contraction créant en réaction une précontrainte de compression transversale dans une deuxième partie de la paroi de traverse tendant à serrer l'au moins une portion fortement sollicitée du bord libre contre la face du bras, le bord d'extrémité libre comportant deux portions fortement sollicitées agencées de manière diamétralement opposée par rapport à l'axe principal de la traverse et deux portions faiblement sollicitées agencées circonférentiellement en alternance avec chaque portion fortement sollicitée, la traverse présentant deux zones de précontrainte distinctes chacune agencée parallèlement à une des portions faiblement sollicitée associée, l'opération de réalisation d'une contraction de chaque zone de précontrainte comprenant la réalisation d'un cordon de soudure de précontrainte qui est dans chaque zone de précontrainte agencée globalement parallèlement à chaque portion faiblement sollicitée du bord libre et à distance de chaque portion faiblement sollicitée du bord libre.

Selon d'autres caractéristiques du procédé selon l'invention :
- la contraction est obtenue par chauffage intense de la zone de précontrainte ;
- la contraction est obtenue par la dépose d'un cordon de soudure, dit de précontrainte, sur ladite zone de précontrainte ;
- chaque portion fortement sollicitée est agencée à une extrémité longitudinale du bord libre, tandis que chaque portion faiblement sollicitée est agencée sur un pôle d'extrémité du profil selon un axe vertical orthogonal aux directions transversale et longitudinale ;
- la traverse est fixée sur le bras longitudinal par soudage ;
- le tronçon d'extrémité de la traverse présente un profil oblong dont le grand axe s'étend longitudinalement ;
- le cordon de précontrainte est en contact uniquement avec la paroi de la traverse ;
- le cordon de précontrainte est agencé à cheval sur la paroi de la traverse et sur le cordon de fixation.

L'invention concerne aussi un essieu pour véhicule automobile selon la revendication 9.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un train arrière de véhicule automobile qui comporte une traverse fixées à des bras, la fixation étant réalisée selon les enseignements de l'invention ;
- le figure 2 est une vue de détail à plus grande échelle qui représente un tronçon d'extrémité de la traverse fixé sur un bras selon les enseignements de l'invention ;
- la figure 3 est une vue en bout d'un tronçon d'extrémité de la traverse de l'essieu après application du procédé, le bras associé à ladite extrémité n'étant pas représenté pour des raisons de clarté.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif des orientations longitudinale, verticale et transversale indiquées par le trièdre "L,V,T" des figures. La direction longitudinale "L" est orientée d'arrière en avant selon le sens de déplacement normal du véhicule. La direction verticale "V" est orientée de bas en haut depuis le sol sur lequel repose le véhicule vers le toit du véhicule.

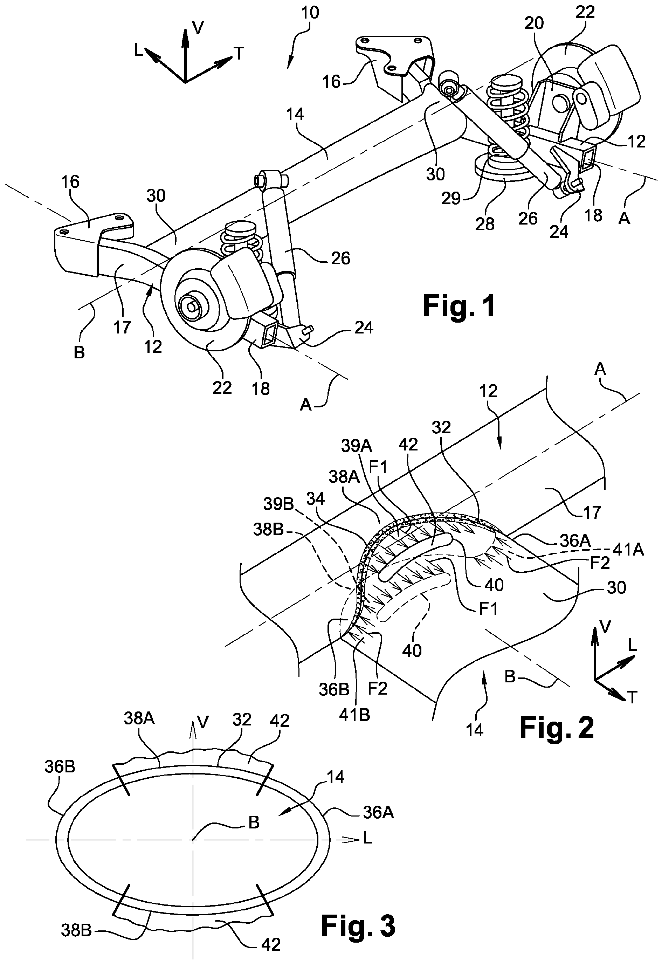

On a représenté à la figure 1 un essieu 10 arrière de véhicule automobile. Il s'agit d'un essieu 10 de type "semi-rigide". Il comporte deux bras 12, dits bras 12 longitudinaux, dont chacun présente un axe "A" principal globalement longitudinal. Les deux bras 12 longitudinaux sont reliés entre eux par une traverse 14 d'axe "B" principal transversal.

Chaque bras 12 longitudinal s'étend depuis une première extrémité 16 avant jusqu'à une deuxième extrémité 18 arrière. Chaque bras 12 longitudinal est ici réalisé en forme de tube creux délimité radialement par une paroi tubulaire présentant une face 17 externe.

La première extrémité 16 avant est destinée à être montée pivotante autour d'un axe transversal sur un châssis (non représenté) du véhicule.

Un tronçon d'extrémité arrière de chaque bras 12 longitudinal est muni d'une équerre 20 qui est destinée à supporter de manière rotative une roue (non représentée) arrière associée du véhicule ainsi qu'un disque 22 de frein associé à la roue.

Dans le mode de réalisation représenté à la figure 1, le bras 12 longitudinal comporte aussi une bride 24 pour supporter un élément 26 d'amortisseur, et une bride 28 pour supporter un organe 29 de suspension du véhicule.

La traverse 14 se présente ici sous la forme d'un profilé métallique. Au moins des tronçons 30 d'extrémité transversale de la traverse 14 présentent, en section selon un plan vertical longitudinal, un profil fermé. Dans l'exemple représenté à la figure 1, la traverse 14 présente un profil fermé sur toute sa longueur. La traverse 14 comporte ainsi une paroi métallique conformée de manière tubulaire selon un profil fermé. La paroi du tronçon 30 d'extrémité est pleine, c'est-à-dire qu'elle est dénuée de perçage, d'évidement ou d'échancrure.

La traverse 14 est réalisée de manière à être rigide en flexion dans le plan vertical et dans le plan longitudinal et de manière à être souple en torsion autour de son axe "B" principal.

La traverse 14 s'étend depuis un premier tronçon 30 d'extrémité transversale de liaison avec le premier bras 12 longitudinal jusqu'à un deuxième tronçon 30 d'extrémité transversale de liaison avec le deuxième bras 12 longitudinal.

Chaque tronçon 30 d'extrémité de la traverse 14 est lié au bras 12 longitudinal associé selon le même agencement et selon le même procédé. On décrira par la suite la fixation d'un seul tronçon 30 d'extrémité de la traverse 14 sur le bras 12 longitudinal associé en référence à la figure 2, cette description étant applicable à la fixation de l'autre tronçon 30 d'extrémité sur l'autre bras 12 longitudinal.

Comme représenté à la figure 2, le tronçon 30 d'extrémité s'étend en direction du bras 12 longitudinal associé jusqu'à un bord 32 d'extrémité transversale libre. Du fait du profil fermé du tronçon 30 d'extrémité, le bord 32 libre présente un contour fermé. Le bord 32 libre est conformé de manière à épouser la forme de la face 17 externe du bras 12 longitudinal sur lequel le tronçon 30 est destiné à être fixé. Le bord 32 d'extrémité libre est ainsi jointif sur toute sa longueur avec la face 17 externe du bras 12 longitudinal.

La fixation du tronçon 30 d'extrémité de la traverse 14 sur le bras 12 longitudinal associé est réalisée par soudage. Ainsi, un cordon de soudure, dit cordon 34 de fixation, est déposé tout autour du bord 32 libre, à cheval sur la face 17 externe du bras 12 longitudinal et sur la paroi externe de la traverse 14. Le cordon 34 présente ainsi une forme annulaire. Un tel cordon 34 de fixation est aussi qualifié de "périmétrique". Ainsi, le bord 32 libre est fixé sur toute sa longueur contre la face 17 externe du bras 12 longitudinal.

Ce cordon 34 de fixation est ici réalisé en une seule opération. L'extrémité finale du cordon 34 de fixation recouvre son extrémité initiale.

En variante non représentée, le cordon de fixation est réalisé en plusieurs opérations, par dépôt de secteurs de cordon successifs dont les extrémités se recouvrent.

En variante non représentée de l'invention, le bord libre de la traverse est fixé au bras longitudinal par brasage.

Lors de l'utilisation de l'essieu 10, le tronçon 30 d'extrémité de la traverse 14 notamment est soumis à des sollicitations de flexion autour d'un axe (non représenté) vertical passant à proximité de l'axe "B" principal de la traverse 14. De ce fait, les portions 36A, 36B avant et arrière du bord 32 libre, c'est-à-dire les portions 36A, 36B les plus éloignées longitudinalement de l'axe vertical de flexion, sont alternativement soumises à un effort intense d'écartement par rapport à la face 17 externe du bras 12 longitudinal. Ces portions 36A, 36B fortement sollicitées sont ici agencées de manière diamétralement opposée par rapport à l'axe "B" principal de la traverse 14, autour des deux pôles avant et arrière longitudinalement les plus éloignés de l'axe "B" principal de la traverse 14, comme cela est représenté à la figure 3.

Inversement, d'autres portions 38A, 38B supérieure et inférieure du bord 32 libre sont soumises à des sollicitations beaucoup plus faibles d'écartement. Ces portions 38A, 38B faiblement sollicitées sont agencées autour des deux pôles agencés verticalement au droit de l'axe "B" principal de la traverse 14. Ces portions 38A, 38B faiblement sollicitées sont ainsi agencées circonférentiellement en alternance avec les portions 36A, 36B fortement sollicitées.

Dans la suite de la description et en référence au mode de réalisation représenté à la figure 2, les portions fortement sollicitées du bord 32 libre seront par la suite appelées portion 36A avant et portion 36B arrière. De même, les portions faiblement sollicitées seront appelées portion 38A supérieure et portion 38B inférieure.

Ainsi, les efforts d'écartement sont concentrés sur les portions 36A, 36B avant et arrière, ce qui aboutit à une détérioration prématurée par fatigue du cordon 34 de fixation dans ces portions 36A, 36B.

Pour reporter une partie des sollicitations d'écartement s'appliquant aux portions 36A, 36B avant et arrière vers les portions 38A, 38B supérieure et inférieure, et ainsi diminuer l'intensité de la sollicitation des portions 36A, 36B avant et arrière, le tronçon 30 d'extrémité de la traverse 14 présente ici un profil oblong dont le grand axe est orienté longitudinalement, parallèlement à l'axe "A" principal du bras 12 longitudinal afin d'augmenter la distance longitudinale entre les portions 36A, 36B avant et arrière du bord 32 libre.

Cependant, dans certains cas de sollicitations extrêmes, l'effort d'écartement agissant sur les portions 36A, 36B avant et/ou arrière demeurent trop élevé.

L'invention propose un procédé simple et peu onéreux pour le renforcement de la fixation de la traverse 14 sur le bras 12 longitudinal.

Postérieurement à la fixation par soudage de la traverse 14 sur le bras 12 longitudinal, une zone 40, dite "zone 40 de précontrainte", de la paroi de la traverse 14 située transversalement à distance de chaque portion 38A, 38B supérieure et inférieure faiblement sollicitée du bord 32 libre est soumise à une opération de contraction. En d'autres termes, l'opération de réalisation d'une contraction de la zone 40 de précontrainte est réalisée après la fixation de la traverse 14 sur le bras 12 longitudinal.

Dans l'exemple représenté à la figure 2, la traverse 14 comporte une zone 40 de précontrainte supérieure et une zone 40 de précontrainte inférieure. Chaque zone 40 de précontrainte s'étend circonférentiellement sur une bande globalement parallèle à la portion 38A, 38B supérieure ou inférieure associée du bord 32 libre. Par conséquent, la zone 40 de précontrainte s'étend sur une bande globalement orthogonale à l'axe de la traverse 14. Ainsi, une première partie 39A, 39B d'extrémité libre supérieure, respectivement inférieure, de la paroi de la traverse 14 délimitée transversalement entre la zone 40 de précontrainte et la portion 38A, 38B supérieure, respectivement inférieure, du bord 32 libre n'est pas soumise à cette opération de contraction.

On définit aussi une deuxième partie 41A, 41B d'extrémité libre avant, respectivement arrière, de la paroi de la traverse 14 qui est interposée circonférentiellement entre les premières parties 39A, 39B d'extrémité libre supérieure et inférieure, et qui est délimitée transversalement dans un sens par la portion 36A, 36B avant, respectivement arrière, du bord 32 libre.

La contraction de cette zone 40 de précontrainte crée une précontrainte de traction sur la première partie 39A, 39B d'extrémité libre supérieure ou inférieure associée de paroi orthogonalement à la direction circonférentielle de la zone 40 de précontrainte. La précontrainte de traction sur les premières parties 39A, 39B supérieure ou inférieure associée de paroi est illustrée par les flèches "F1" de la figure 2. Cette précontrainte de traction produit sur le cordon 34 de fixation une force de traction qui est très inférieure à la limite de résistance du cordon 34 de fixation. Ainsi, la contraction produit une précontrainte dite de traction qui s'applique localement à la première partie 39A, 39B de paroi et qui tend à écarter transversalement la portion 38A, 38B supérieure ou inférieure du bord 32 libre par rapport au bras 12 longitudinal.

Cependant, étant donné que chaque portion 38A, 38B supérieure et inférieure demeure fixée au bras 12 longitudinal par le cordon 34 de fixation, cette contraction produit, en réaction, une précontrainte de compression des deuxième parties 41A, 41B de paroi de la traverse 14, comme cela est illustré par les flèches "F2" de la figure 2. Cette précontrainte de compression tend à serrer les portions 36A, 36B avant et arrière de bord libre contre la face externe du bras 12 longitudinal.

A cet effet, chaque zone 40 de précontrainte est agencée à proximité suffisante de la portion 38A, 38B supérieure ou inférieure associée du bord 32 libre pour que la force de traction provoquée par la contraction soit transmise à ladite portion 38A, 38B via la première partie 39A, 39B de paroi. Si la zone 40 de précontrainte était agencée trop loin du bord 32 libre, le force de traction serait en effet absorbée par l'élasticité propre de la paroi de traverse 14.

En outre, la zone 40 de précontrainte s'interrompt circonférentiellement avant d'être transversalement au droit des portions 36A, 36B avant et arrière fortement sollicitées. Ceci permet d'éviter d'ajouter une précontrainte de traction à l'extrémité des portions 36A, 36B avant et/ou arrière du bord 32 libre déjà fortement sollicitées.

L'intensité de la précontrainte de compression de chaque portion 36A, 36B avant et arrière contre le bras 12 longitudinal est d'autant plus élevée que le rapport entre la longueur circonférentielle de la zone 40 de précontrainte et la longueur linéaire des portions 36A, 36B avant et arrière est élevée. Ainsi, étant donnée la forme oblongue du profil du tronçon 30 d'extrémité transversal de la traverse 14, la longueur linéaire des portions 38A, 38B supérieure et inférieure est plus grande que la longueur linéaire des portions 36A, 36B avant et arrière fortement sollicitées. Ceci permet d'adapter la longueur des deux zones 40 de précontraintes supérieure et inférieure en fonction de l'intensité de précontrainte requise pour renforcer la fixation de la traverse 14 sur le bras 12. Ainsi, le rapport entre la longueur cumulée des deux zones 40 de précontraintes supérieure et inférieure et la longueur linéaire des portions 36A, 36B avant et arrière du bord 32 libre pourra par exemple être compris entre 0,2 et 1,2, le rapport étant par exemple égal à 0,25.

Selon le mode de réalisation du procédé représenté à la figure 2, l'opération de contraction est réalisée par la dépose d'un cordon 42 de soudure sur une face externe de ladite zone 40 de précontrainte. Ce cordon 42 de soudure sera par la suite appelé cordon 42 de précontrainte pour le distinguer du cordon 34 de fixation. On a en effet constaté que la dépose de métal en fusion sur la zone 40 de précontrainte pour former un cordon 42 de soudure de précontrainte provoquait, lors du refroidissement du cordon 42 de soudure une contraction efficace dans le but de produire une précontrainte de compression de chaque portion 36A, 36B avant et arrière.

Comme expliqué précédemment, les cordons de précontrainte sont déposés uniquement dans les zones 40 de précontrainte, à l'exclusion de zones situées transversalement face aux portions fortement sollicitées de manière à ne pas créer de force de traction sur les portions fortement sollicitées.

Ces cordons 42 de précontrainte sont ici destinés uniquement à produire une contraction. Ils ne remplissent aucune fonction de fixation. En conséquence, ces cordons 42 de précontrainte sont en contact uniquement avec la paroi de la traverse 14.

Selon une variante non représentée de l'invention, les cordons de précontrainte sont agencés à cheval sur la paroi de la traverse 14 et sur le cordon 34 de fixation.

L'obtention de l'effet de contraction par dépôt d'un cordon 42 de précontrainte présente l'avantage d'être aisé et peu onéreux à réaliser. La ligne de fabrication de l'essieu 10 dispose en effet déjà des moyens de soudage adaptés pour réaliser un tel cordon 42 de précontrainte.

L'essieu 10 ainsi réalisé permet une meilleure répartition des sollicitations d'écartement sur toute le tour du bord 32 libre de la traverse 14. En effet, lorsqu'une des portions 36A, 36B avant ou arrière du bord 32 libre est soumise à une forte sollicitation d'écartement, la précontrainte de compression s'oppose à la sollicitation d'écartement. De ce fait, une partie de la sollicitation d'écartement égale à la précontrainte de compression est transmise aux portions 38A, 38B faiblement sollicitées. Ainsi, le cordon 34 de fixation travaille sur une plus grande longueur lors des fortes sollicitations, diminuant ainsi les risques de détérioration par fatigue.

## Revendications

1. Procédé de renforcement de la fixation d'une traverse (14) d'axe (B) transversal d'un essieu (10) élastique en torsion sur un bras (12) longitudinal dudit essieu (10), au moins un tronçon (30) d'extrémité transversale de la traverse (14) étant formé par une paroi métallique présentant un profil fermé se terminant par un bord (32) d'extrémité libre de contour fermé, le bord (32) d'extrémité libre étant fixé sur toute sa longueur avec la face (17) du bras (12) longitudinal, le bord (32) libre comportant au moins 2. une première portion (36A, 36B) dite "portion fortement sollicitée" et au moins une deuxième portion (38A, 38B), dite "portion faiblement sollicitée",
**caractérisé en ce qu'**il comporte, postérieurement à la fixation de la traverse (14) sur le bras (12) longitudinal, une opération de réalisation d'une contraction d'au moins une zone (40), dite de précontrainte, de la paroi de la traverse (14) située transversalement à distance de l'au moins une portion (38A, 38B) faiblement sollicitée du bord (32) libre pour créer une précontrainte de traction transversale dans une première partie de la paroi de traverse (14) tendant à écarter l'au moins une portion (38A, 38B) faiblement sollicitée de la face (17) du bras (12), cette contraction créant en réaction une précontrainte de compression transversale dans une deuxième partie de la paroi de traverse (14) tendant à serrer l'au moins une portion (36A, 36B) fortement sollicitée du bord libre contre la face (17) du bras,
le bord (32) d'extrémité libre comportant deux portions (36A, 36B) fortement sollicitées agencées de manière diamétralement opposée par rapport à l'axe (B) principal de la traverse (14) et deux portions (38A, 38B) faiblement sollicitées agencées circonférentiellement en alternance avec chaque portion (36A, 36B) fortement sollicitée, la traverse (14) présentant deux zones (40) de précontrainte distinctes chacune agencée parallèlement à une des portions (38A, 38B) faiblement sollicitée associée, l'opération de réalisation d'une contraction de la zone (40) de précontrainte comprenant la réalisation d'un cordon (42) de soudure de précontrainte qui est dans chaque zone de précontrainte agencée globalement parallèlement à chaque portion faiblement sollicitée du bord libre et à distance de chaque portion faiblement sollicitée (38A, 38B), du bord (32) libre.

2. Procédé selon la revendication précédente, **caractérisé en ce que** la contraction est obtenue par chauffage intense de la zone (40) de précontrainte.

3. Procédé selon l'une quelconque des revendications précédentes, **caractérisé en ce que** la contraction est obtenue par la dépose d'un cordon (42) de soudure, dit de précontrainte, sur ladite zone (40) de précontrainte.

4. Procédé selon la revendication précédente, **caractérisé en ce que** chaque portion (36A, 36B) fortement sollicitée est agencée à une extrémité longitudinale du bord (32) libre, tandis que chaque portion (38A, 38B) faiblement sollicitée est agencée sur un pôle d'extrémité du profil selon un axe vertical orthogonal aux directions transversale et longitudinale.

5. Procédé selon l'une quelconque des revendications précédentes, **caractérisé en ce que** la traverse (14) est fixée sur le bras (12) longitudinal par soudage.

6. Procédé selon l'une quelconque des revendications précédentes, **caractérisé en ce que** le tronçon (30) d'extrémité de la traverse (14) présente un profil oblong dont le grand axe s'étend longitudinalement.

7. Procédé selon l'une quelconque des revendications 3 à 6, **caractérisé en ce que** le cordon (42) de précontrainte est en contact uniquement avec la paroi de la traverse (14).

8. Procédé selon l'une quelconque des revendications 3 à 6, **caractérisé en ce que** le cordon (42) de précontrainte est agencé à cheval sur la paroi de la traverse (14) et sur le cordon (34) de fixation.

9. Essieu (10) pour véhicule automobile comportant une traverse (14) élastique en torsion reliant deux bras (12) longitudinaux dudit essieu (10), au moins un tronçon (30) d'extrémité transversale de la traverse (14) étant formé par une paroi métallique présentant un profil fermé se terminant par un bord (32) d'extrémité libre de contour fermé, le bord (32) d'extrémité libre étant jointif sur toute sa longueur avec la face (17) du bras (12) longitudinal, le bord (32) d'extrémité libre comportant au moins une première portion (36A, 36B) dite "portion fortement sollicitée", qui est fixée contre une face (17) du bras (12) longitudinal associé, et au moins une deuxième portion (38A, 38B), dite "portion faiblement sollicitée" qui est fixée contre la face (17) du bras (12) associé,
**caractérisé en ce que** la paroi de la traverse (14) comporte une zone (40) de précontrainte située transversalement à distance de l'au moins une portion faiblement sollicitée (38A, 38B) du bord (32) libre, cette zone (40) de précontrainte étant destinée à subir une opération de réalisation d'une contraction pour créer une précontrainte de traction transversale dans une première partie de la paroi de traverse (14) tendant à écarter l'au moins une portion (38A, 38B) faiblement sollicitée de la face (17) du bras (12), afin de créer en réaction une précontrainte de compression transversale dans une deuxième partie de la paroi tendant à serrer l'au moins une portion (36A, 36B) fortement sollicitée du bord libre contre la face (17) du bras,
le bord (32) d'extrémité libre comportant deux portions (36A, 36B) fortement sollicitées agencées de manière diamétralement opposée par rapport à l'axe (B) principal de la traverse (14) et deux portions (38A, 38B) faiblement sollicitées agencées circonférentiellement en alternance avec chaque portion (36A, 36B) fortement sollicitée, la traverse (14) présentant deux zones (40) de précontrainte distinctes chacune agencée parallèlement à une des portions (38A, 38B) faiblement sollicitée associée, la traverse (14) présentant un cordon (42) de soudure de précontrainte qui est dans chaque zone de précontrainte agencée globalement parallèlement à chaque portion faiblement sollicitée du bord libre et à distance de chaque portion faiblement sollicitée (38A, 38B), du bord (32) libre.

## Patentansprüche

1. Verfahren zur Verstärkung der Befestigung eines Querträgers (14) mit Querachse (B) einer torsionselastischen Achse (10) an einem Längslenker (12) der Achse (10), wobei mindestens ein Querendabschnitt (30) des Querträgers (14) durch eine metallische Wand gebildet wird, die ein geschlossenes Profil aufweist, das in einem freien Endrand (32) mit geschlossener Kontur endet, wobei der freie Endrand (32) über seine gesamte Länge mit der Fläche (17) des Längslenkers (12) befestigt ist, wobei der freie Rand (32) mindestens einen ersten Abschnitt (36A, 36B), den so genannten "stark beaufschlagten Abschnitt", und mindestens einen zweiten Abschnitt (38A, 38B), den so genannten "leicht beaufschlagten Abschnitt", aufweist,
**dadurch gekennzeichnet, dass** es nach der Befestigung des Querträgers (14) an dem Längslenker (12) einen Vorgang der Durchführung einer Kontraktion mindestens einer so genannten Vorspannungszone (40) der Wand des Querträgers (14) aufweist, die quer von dem mindestens einen leicht beaufschlagten Abschnitt (38A, 38B) des freien Rands (32) beabstandet angeordnet ist, um eine Querzugvorspannung in einem ersten Teil der Wand des Querträgers (14) zum Beabstanden des mindestens einen leicht beaufschlagten Abschnitts (38A, 38B) von der Fläche (17) des Lenkers (12) zu erzeugen, wobei diese Kontraktion als Reaktion eine Querdruckvorspannung in einem zweiten Teil der Wand des Querträgers (14) zum Festziehen des mindestens einen stark beaufschlagten Abschnitts (36A, 36B) des freien Rands gegen die Fläche (17) des Lenkers erzeugt,
wobei der freie Endrand (32) zwei stark beaufschlagte Abschnitte (36A, 36B), die bezüglich der Hauptachse (B) des Querträgers (14) einander diametral gegenüberliegend angeordnet sind, und zwei leicht beaufschlagte Abschnitte (38A, 38B) aufweist, die umfangsmäßig abwechselnd mit jedem stark beaufschlagten Abschnitt (36A, 36B) angeordnet sind, wobei der Querträger (14) zwei separate Vorspannungszonen (40) aufweist, die jeweils parallel zu einem der zugeordneten leicht beaufschlagten Abschnitte (38A, 38B) angeordnet sind, wobei der Vorgang der Durchführung einer Kontraktion der Vorspannungszone (40) die Herstellung einer Vorspannungsschweißnaht (42) umfasst, die in jeder Vorspannungszone ist, die allgemein parallel zu jedem leicht beaufschlagten Abschnitt des freien Rands und beabstandet von jedem leicht beaufschlagten Abschnitt (38A, 38B) des freien Rands (32) angeordnet ist.

2. Verfahren nach dem vorhergehenden Anspruch, **dadurch gekennzeichnet, dass** die Kontraktion durch starke Erhitzung der Vorspannungszone (40) erhalten wird.

3. Verfahren nach dem vorhergehenden Anspruch, **dadurch gekennzeichnet, dass** die Kontraktion durch das Anbringen einer so genannten Vorspannungsschweißnaht (42) an der Vorspannungszone (40) erhalten wird.

4. Verfahren nach dem vorhergehenden Anspruch, **dadurch gekennzeichnet, dass** jeder stark beaufschlagte Abschnitt (36A, 36B) an einem Längsende des freien Rands (32) angeordnet wird, während jeder leicht beaufschlagte Abschnitt (38A, 38B) an einem Endpol des Profils gemäß einer orthogonal zu der Quer- und der Längsrichtung verlaufenden vertikalen Achse angeordnet wird.

5. Verfahren nach einem der vorhergehenden Ansprüchem **dadurch gekennzeichnet, dass** der Querträger (14) durch Schweißung an dem Längslenker (12) befestigt wird.

6. Verfahren nach einem der vorhergehenden Ansprüche, **dadurch gekennzeichnet, dass** der Endabschnitt (30) des Querträgers (14) ein längliches Profil aufweist, dessen Hauptachse sich in Längsrichtung erstreckt.

7. Verfahren nach einem der Ansprüche 3 bis 6, **dadurch gekennzeichnet, dass** die Vorspannungsnaht (42) nur mit der Wand des Querträgers (14) in Kontakt ist.

8. Verfahren nach einem der Ansprüche 3 bis 6, **dadurch gekennzeichnet, dass** die Vorspannungsnaht (42) die Wand des Querträgers (14) und die Befestigungsnaht (34) überspreizend angeordnet ist.

9. Achse (10) für ein Kraftfahrzeug, aufweisend einen torsionselastischen Querträger (14), der zwei Längslenker (12) der Achse (10) verbindet, wobei mindestens ein Querendabschnitt (30) des Querträgers (14) durch eine metallische Wand gebildet wird, die ein geschlossenes Profil aufweist, das in einem freien Endrand (32) mit geschlossener Kontur endet, wobei der freie Endrand (32) über seine gesamte Länge an der Fläche (17) des Längslenkers (12) angrenzt, wobei der freie Endrand (32) mindestens einen ersten Abschnitt (36A, 36B), den so genannten "stark beaufschlagten Abschnitt", der gegen eine Fläche (17) des zugeordneten Längslenkers (12) befestigt ist, und mindestens einen zweiten Abschnitt (38A, 38B), den so genannten "leicht beaufschlagten Abschnitt", der gegen die Fläche (17) des zugeordneten Längslenkers (12) befestigt ist, aufweist,
**dadurch gekennzeichnet, dass** die Wand des Querträgers (14) eine Vorspannungszone (40) aufweist, die quer von dem mindestens einen leicht beaufschlagten Abschnitt (38A, 38B) des freien Rands (32) beabstandet angeordnet ist, wobei diese Vorspannungszone (40) dazu bestimmt ist, einem Vorgang der Durchführung einer Kontraktion unterzogen zu werden, um eine Querzugvorspannung in einem ersten Teil der Wand des Querträgers (14) zum Beabstanden des mindestens einen leicht beaufschlagten Abschnitts (38A, 38B) von der Fläche (17) des Lenkers (12) zu erzeugen, um als Reaktion eine Querdruckvorspannung in einem zweiten Teil der Wand zum Festziehen des mindestens einen stark beaufschlagten Abschnitts (36A, 36B) des freien Rands gegen die Fläche (17) des Lenkers zu erzeugen,
wobei der freie Endrand (32) zwei stark beaufschlagte Abschnitte (36A, 36B), die bezüglich der Hauptachse (B) des Querträgers (14) einander diametral gegenüberliegend angeordnet sind, und zwei leicht beaufschlagte Abschnitte (38A, 38B) aufweist, die umfangsmäßig abwechselnd mit jedem stark beaufschlagten Abschnitt (36A, 36B) angeordnet sind, wobei der Querträger (14) zwei separate Vorspannungszonen (40) aufweist, die jeweils parallel zu einem der zugeordneten leicht beaufschlagten Abschnitte (38A, 38B) angeordnet sind, wobei der Querträger (14) eine Vorspannungsschweißnaht (42) aufweist, die in jeder Vorspannungszone ist, die allgemein parallel zu jedem leicht beaufschlagten Abschnitt des freien Rands und beabstandet von jedem leicht beaufschlagten Abschnitt (38A, 38B) des freien Rands (32) angeordnet ist.

## Claims

1. Method for reinforcing the attachment of a crosspiece (14), of transverse axis (B), of a torsionally resilient axle (10) to a longitudinal arm (12) of said axle (10), at least one transverse end section (30) of the crosspiece (14) being formed by a metal wall having a closed profile that ends in a free end edge (32) of closed outline, the free end edge (32) being attached along its entire length to the surface (17) of the longitudinal arm (12), the free edge (32) having at least one first portion (36A, 36B), referred to as "highly loaded portion", and at least one second portion (38A, 38B), referred to as "lightly loaded portion", **characterized in that** it comprises, after attachment of the crosspiece (14) to the longitudinal arm (12), an operation of realizing a contraction of at least one zone (40), referred to as a prestress zone, of the wall of the crosspiece (14) located transversely at a distance from the at least one lightly loaded portion (38A, 38B) of the free edge (32) to create a transverse tensile prestress in a first part of the crosspiece wall (14) tending to move the at least one lightly loaded portion (38A, 38B) away from the surface (17) of the arm (12), this contraction creating, in reaction, a transverse compressive prestress in a second part of the crosspiece wall (14) tending to clamp the at least one highly loaded portion (36A, 36B) of the free edge against the surface (17) of the arm,
the free end edge (32) having two highly loaded portions (36A, 36B) arranged in a diametrically opposed manner with respect to the main axis (B) of the crosspiece (14) and two lightly loaded portions (38A, 38B) arranged circumferentially, alternating with each highly loaded portion (36A, 36B), the crosspiece (14) having two separate prestress zones (40) each arranged parallel to one of the associated lightly loaded portions (38A, 38B), the operation of realizing a contraction of the prestress zone (40) comprising the realization of a prestressing weld bead (42) which is in each prestress zone arranged generally parallel to each lightly loaded portion of the free edge and at a distance from each lightly loaded portion (38A, 38B) of the free edge (32).

2. Method according to the preceding claim, **characterized in that** the contraction is obtained by intense heating of the prestress zone (40).

3. Method according to either one of the preceding claims, **characterized in that** the contraction is obtained by the deposition of a weld bead (42), referred to as a prestressing weld bead (42), on said prestress zone (40).

4. Method according to the preceding claim, **characterized in that** each highly loaded portion (36A, 36B) is arranged at a longitudinal end of the free edge (32), while each lightly loaded portion (38A, 38B) is arranged on an end pole of the profile along a vertical axis orthogonal to the transverse and longitudinal directions.

5. Method according to any one of the preceding claims, **characterized in that** the crosspiece (14) is attached to the longitudinal arm (12) by welding.

6. Method according to any one of the preceding claims, **characterized in that** the end section (30) of the crosspiece (14) has an elongate profile whose major axis extends longitudinally.

7. Method according to any one of Claims 3 to 6, **characterized in that** the prestressing bead (42) is in contact only with the wall of the crosspiece (14).

8. Method according to any one of Claims 3 to 6, **characterized in that** the prestressing bead (42) is arranged in a manner straddling the wall of the crosspiece (14) and the attachment bead (34).

9. Axle (10) for a motor vehicle, comprising a torsionally resilient crosspiece (14) connecting two longitudinal arms (12) of said axle (10), at least one transverse end section (30) of the crosspiece (14) being formed by a metal wall having a closed profile that ends in a free end edge (32) of closed outline, the free end edge (32) being joined along its entire length to the surface (17) of the longitudinal arm (12), the free end edge (32) comprising at least one first portion (36A, 36B), referred to as "highly loaded portion", which is attached to a surface (17) of the associated longitudinal arm (12), and at least one second portion (38A, 38B), referred to as "lightly loaded portion", which is attached to the surface (17) of the associated arm (12),
**characterized in that** the wall of the crosspiece (14) comprises a prestress zone (40) located transversely at a distance from the at least one lightly loaded portion (38A, 38B) of the free edge (32), this prestress zone (40) being intended to undergo an operation of realizing a contraction to create a transverse tensile prestress in a first part of the crosspiece wall (14) tending to move the at least one lightly loaded portion (38A, 38B) away from the surface (17) of the arm (12) in order to create, in reaction, a transverse compressive prestress in a second part of the wall tending to clamp the at least one highly loaded portion (36A, 36B) of the free edge against the surface (17) of the arm,
the free end edge (32) having two highly loaded portions (36A, 36B) arranged in a diametrically opposed manner with respect to the main axis (B) of the crosspiece (14) and two lightly loaded portions (38A, 38B) arranged circumferentially, alternating with each highly loaded portion (36A, 36B), the crosspiece (14) having two separate prestress zones (40), each arranged parallel to one of the associated lightly loaded portions (38A, 38B), the crosspiece (14) having a prestressing weld bead (42) which is in each prestress zone arranged generally parallel to each lightly loaded portion of the free edge and at a distance from each lightly loaded portion (38A, 38B) of the free edge (32).
